# EUROPÄISCHE PATENTSCHRIFT

(11) **EP 0 886 629 B1**
(45) Veröffentlichungstag und Bekanntmachung des Hinweises auf die Patenterteilung: **02.05.2002**
(21) Anmeldenummer: 96942286.4
(22) Anmeldetag: 30.11.1996
(51) Int. Cl.: C04B 41/88, C23C 18/08, B44F 9/04

(54) **VERFAHREN ZUM FÄRBEN VON KERAMIKOBERFLÄCHEN**
METHOD FOR THE COLOURING OF CERAMIC SURFACES
PROCEDE DE COLORATION DE SURFACES CERAMIQUES

(30) Priorität: 12.12.1995 DE 19546325
(43) Veröffentlichungstag der Anmeldung: 30.12.1998
(73) Patentinhaber: BK Giulini Chemie GmbH & Co. OHG, 67065 Ludwigshafen (DE); W.C. Heraeus GmbH & Co. KG, 63450 Hanau (DE)
(72) Erfinder: KLEIN, Thomas, D-69121 Heidelberg (DE); STAFFEL, Thomas, D-67269 Grünstadt (DE); FISCHER, Lysander, D-69231 Rauenberg (DE); WALTER, Richard, D-63755 Alzenau (DE); PATZELT, Peter, D-63743 Aschaffenburg (DE)
(86) Internationale Anmeldenummer: EP9605312
(87) Internationale Veröffentlichungsnummer: WO9721646

(56) Entgegenhaltungen:
- EP-A- 0 219 788
- DE-C- 4 320 072

## Beschreibung

Gegenstand der vorliegenden Erfindung ist ein neues Verfahren zum Färben von Keramikoberflächen unter Verwendung der wäßrigen Lösung einer Goldverbindung.

Die Herstellung von rosa Farbtönen in der Keramischen Industrie erweist sich als relativ problematisch. Üblich ist die Erzeugung von Pigmentfarben, die durch Zusammensintern von verschiedenartigsten Metalloxiden erzeugt und mit Borsäure als Fließhilfsmittel auf die Keramikoberfläche aufgebracht werden.

Beispielsweise ist in DD 224026 ein "Pinkfarbkörper" beschrieben, der die ungefähre Zusammensetzung 2 CaCO₃ x SnO₂ x 2 SiO₂ x H₃BO₃ besitzt und 0,1 - 1,5 % Cr₂O₃ als farbgebende Komponente enthält.

Nachteilig bei diesen Pigmentpulvern ist es, daß sie entweder der gesamten Keramikmasse zugefügt werden müssen und damit keine Musterung erlauben oder nur als dünne Schicht auf der Oberfläche der Keramik aufliegen und damit die Keramikoberfläche verändern, so daß eine nachträgliche Bearbeitung der Oberfläche nicht mehr möglich ist.

Es ist weiter bekannt, daß kolloidales Gold, welches durch Zinnoxid stabilisiert ist, tief rubinrote bis lilarote Färbungen ergibt (Cassius'scher Goldpurpur). Der Zusatz dieses Goldpurpurs zu Gläsern oder Glasuren ergibt entsprechend rubinrot bis lila gefärbte Gläser (Goldrubinglas) und Glasuren (S. Stephanov et al., Keramikglasuren, Wiesbaden/Berlin 1988, Seite 127).

Es ist ferner bekannt, daß Goldsulforesinate, welche, in einem organischen Lösungsmittel suspendiert, auf eine keramische Oberfläche aufgetragen und bei 500 - 800°C gebrannt werden, einen dünnen Film aus metallischem Gold ergeben, welcher einen typischen Goldglanz aufweist (vgl. DE-C1-41 22 131).

Gemäß DE-C1-43 20 072 lassen sich verdünnte wäßrige Lösungen von Goldsalzen, insbesondere von Goldchloriden, wie Gold(III)-chlorid oder Tetrachlorogoldsäure, welche als Monohydrat und Trihydrat handelsüblich ist, zur Einfärbung der Oberflächen von Keramikkörpern, wie Fliesen oder Porzellan, verwenden. Durch Calcinieren der so oberflächlich eingefärbten Keramikkörper wird auf sehr einfache Weise eine rosa bis blaue Färbung erhalten.

Als nachteilig bei diesem Verfahren hat sich herausgestellt, daß die verwendeten Goldsalzlösungen unter den üblichen Lagerungs- und Verarbeitungsbedingungen nicht stabil sind und insbesondere mit metallischen Oberflächen in den verwendeten Vorrichtungen und mit reduzierenden Verunreinigungen oder Additiven unter Bildung von amorphem Gold reagieren, welches als "Schlamm" ausfällt.

Es stellte sich daher die Aufgabe, ein neues Verfahren zum Färben, insbesondere Rosafärben, von Keramikoberflächen zu finden, bei dem die Färbung nachträglich in die Oberflächenschicht des keramischen Materials eingebracht werden kann und diese etwa 0,5 - 2 mm tief verfärbt, so daß sowohl eine Musterung als auch eine Bearbeitung der Oberfläche möglich ist. In dem Verfahren soll eine stabile, ungiftige Goldverbindung verwendet werden.

Diese Aufgabe wird durch die im Hauptanspruch wiedergegebenen Merkmale gelöst und durch die in den Unteransprüchen wiedergegebenen Merkmale gefördert.

Das die Lösung der Aufgabe darstellende Verfahren ist erfindungsgemäß dadurch gekennzeichnet, daß man die Oberflächen mit einer wäßrigen Alkalimetall- oder Ammoniumdithiosulfatoaurat(l)-Lösung mit einer Gold-Konzentration von 0,1 - 10 Gewichts-% behandelt, das Wasser verdampft und das Dithiosulfatoaurat(I) bei Temperaturen von 300 - 1400°C zersetzt.

Für das Verfahren wird eine Dithiosulfatoaurat(I)-Lösung mit einer Gold-Konzentration von 0,5 - 5,0 Gewichts-% bevorzugt.

Besonders bewährt hat sich das Verfahren, wenn die Zersetzung des Alkalimetall- oder Ammoniumdithiosulfatoaurats(l)- im folgenden meist als Thiosulfatoaurat bezeichnet - bei Temperaturen von 800 - 1200°C, insbesondere 1140°C, erfolgt.

Bei dem erfindungsgemäßen Verfahren kann die wäßrige Lösung des Thiosulfatoaurats in üblicher Weise durch Sprühen, Tauchen, Malen, Drucken usw. auf die zu färbenden Keramikkörper aufgetragen werden.

Nach dem Trocknen werden die Keramikkörper in einem geeigneten Ofen bei einer definierten Temperatur bei 300 - 1400°C, vorteilhafterweise bei etwa 800 - 1200°C, und, insbesondere zur Erzeugung einer Rosafärbung, bei 1140°C gebrannt, wobei die Brenndauer etwa eine halbe bis fünf Stunden, vorzugsweise ein bis zwei Stunden, beträgt. Durch das Brennen wird das Thiosulfatoaurat pyrolysiert und elementares Gold in feinverteilter Form gebildet. Maßgeblich für den Farbeindruck ist die Größe und die Verteilung der Goldpartikel, welche durch Brenntemperatur und Brenndauer gesteuert wird. Bei Temperaturen von etwa 300 - 400°C ist der erhaltene Farbton blau und geht bei Temperaturen von 400 - 1000°C in lila über, um bei Temperaturen von über 1000°C einen reinen Rosaton zu ergeben. Wichtig ist auch die Gold-Konzentration der Thiosulfatoaurat-Lösungen, da unterhalb von etwa 0,1 Gew.-% Gold der Farbeindruck zu blaß wird und oberhalb von 10 Gewichts-% Gold der Farbeindruck nach dem Brennen in einen für metallisches, amorph verteiltes Gold typischen Braunton umschlägt. Bevorzugt wird daher insbesondere ein Bereich von 0,3 - 5 Gewichts-% Gold in der Thiosulfatoaurat-Lösung.

Überraschenderweise lassen sich die Alkalimetall- und Ammoniumthiosulfatoaurat(I)-Komplexe unter den gleichen Bedingungen pyrolysieren wie Gold(III)chlorid. Sie sind gegen Reduktionsmittel wie metallisches Eisen stabil, so daß Geräte - Rahmen, Siebe, Düsen - aus Eisen beziehungsweise Eisen-Legierungen verwendet werden können.

Der nach dem Brennen erhaltene Farbeindruck kann objektiv mit Hilfe eines La*b*-Systems wiedergegeben werden. In diesem System steht L für die Helligkeit, während a* und b* sowohl den Farbton als auch die Sättigung angeben. a* bezeichnet dabei die Position auf einer Rot-Grün-Achse und b* die Position auf einer Gelb-Blau-Achse.

### Ausführungsbeispiele für das Verfahren gemäß der Erfindung

### Eingesetzte Lösungen

### • Lösung. I

Die Lösung I ist eine Zubereitung aus Wasser und
6,0 g/l Gold als Natriumdithiosulfatoaurat(I),
40,0 g/l Natriumthiosulfat,
8,0 g/l Dinatriumhydrogenphosphat,
8,0 g/l Natriumdihydrogenphosphat,
14,0 g/l Kaliumperoxomonosulfat und
8,5 g/l Ethylendiamintetraessigsäure, Tetranatriumsalz.

Die Lösung weist eine Gold-Konzentration von 0,6 Gewichts-% und einen pH-Wert von 6,0 auf.

### • Lösung. II:

Die Lösung II ist eine Zubereitung aus Wasser und
6,0 g/l Gold als Natriumdithiosulfatoaurat(I) und
40,0 g/l Natriumsulfit.

Die Lösung II weist eine Gold-Konzentration von 0,6 Gewichts-% und einen pH-Wert von 9,8 auf.

### • Lösung III:

Die Lösung III ist eine Zubereitung aus Wasser und
6,0 g/l Gold als Natriumdithiosulfatoaurat(I),
40,0 g/l Natriumsulfit und
Ammoniumhydroxid bis zu einem pH-Wert von 11,4.

Die Gold-Konzentration der Lösung III beträgt 0,6 Gewichts-%.

### Verwendete Fliesen

- Villeroy & Boch, dunkelbrennend, 54 x 54 mm (Typ 1)
- Villeroy & Boch, hellbrennend, 45 x 45 mm
- Villeroy & Boch, hellbrennend, 54 x 54 mm (Typ 2)

In der folgenden Tabelle 1 sind die Ergebnisse von Farbmessungen an Fliesen wiedergegeben, die mit zwei unterschiedlich zusammengesetzten Thiosulfatoaurat-Lösungen, Lösungen I und II, besprüht und bei drei verschiedenen Endtemperaturen 60 Minuten gebrannt wurden (dabei wurden 0,06 g der Thiosulfatoaurat-Lösung auf 1 cm² Fliesenoberfläche aufgetragen). Bei den Endtemperaturen von 800°C und 1140°C wurde jeweils bei 600°C 760 Minuten vorgebrannt, um die thermischen Spannungen zu verringern, bei 400°C wurde insgesamt 300 Minuten gebrannt. Es zeigt sich, daß sich der Farbeindruck von niederen Temperaturen (blau) zu mittleren Temperaturen (lila) bis zu hohen Temperaturen (rosa) verändert.

Die gebrannten Fliesen wurden mit einem "Minolta" Chroma Meter CR-200 vermessen (Absolut-Messungen, La*b*-Farbsystem).

| **Versuch 1** | **Versuch 2** | **Versuch 3** |
|---|---|---|
| T1 = 400°C | T1 = 600°C | T1 = 600°C |
| T2 = 400°C | T2 = 800°C | T2 = 1140°C |
| Zeit 1 = 240 min. | Zeit 1 = 360 min. | Zeit 1 = 360 min. |
| Zeit 2 = 60 min. | Zeit 2 = 60 min. | Zeit 2 = 60 min. |

**Tabelle 1:**

| Ergebnisse der Farbmessungen. | | | | | | |
|---|---|---|---|---|---|---|
| | große Fliesen | | | kleine Fliesen | | |
| | L | a* | b* | L | a* | b* |
| Blindprobe 400°C | 71,26 | + 4,32 | + 10,43 | 79,83 | + 1,74 | + 8,20 |
| Lsg. I 400°C | 63,66 | + 3,07 | + 4,42 | 71,12 | + 2,34 | + 1,09 |
| Lsg. II 400°C | 61,90 | + 2,65 | + 3,36 | 70,99 | + 2,25 | + 0,84 |
| Blindprobe 800°C | 77,91 | + 8,17 | + 14,26 | 86,72 | + 4,46 | + 10,94 |
| Lsg. I 800°C | 68,89 | + 9,48 | + 5,68 | 75,12 | + 6,13 | + 0,41 |
| Lsg. II 800°C | 69,81 | + 7,95 | + 5,37 | 72,71 | + 5,58 | - 1,60 |
| Blindprobe 1140°C | 59,95 | + 0,38 | + 12,50 | 79,16 | + 2,27 | + 15,82 |
| Lsg. I 1140°C | 58,19 | + 2,58 | + 10,76 | 71,79 | + 6,47 | + 12,00 |
| Lsg. II 1140°C | 57,76 | + 3,04 | + 11,15 | 72,19 | + 6,81 | + 12,28 |

Zusätzlich wurden Farbmessungen an großen Fliesen vom Typ 2 durchgeführt (Brenntemperatur 1140°C). Hierbei wurden Farbunterschiede der Blindproben festgestellt, die sich auch auf den Farbton der gefärbten Fliesen auswirken. Die Fliesen des Typs 2 zeigen eine mittelhelle Grundfarbe.

**Tabelle 2:**

| Ergebnisse der Farbmessungen an Fliesen vom Typ 2. | | | |
|---|---|---|---|
| | L | a* | b* |
| Blindprobe | 65,28 | + 0,68 | + 14,26 |
| Lösung I | 60,80 | + 4,78 | + 11,55 |
| Lösung II | 60,12 | + 5,38 | + 11,26 |

Überraschenderweise scheint die Natur des Keramikkörpers nur einen geringen Einfluß auf die Färbung zu haben, da sich Fliesen und Porzellanscherben unter gleichen Auftrags- und Brennbedingungen etwa in gleicher Weise färben. Wie die Tabelle 2 zeigt, addiert sich jedoch eine eventuelle Grundfärbung des Scherbens zum Farbton.

Die gefärbte Keramikschicht weist eine Dicke von ungefähr 0,5 - 2 mm, insbesondere von etwa 1 mm, auf, so daß es möglich ist, Rauhigkeiten der Scherben abzuschleifen (ca. 0,3 - 0,5 mm) und die Oberfläche zu polieren, ohne den Farbeindruck zu beeinträchtigen. Insbesondere bei hart gebrannten Fliesen lassen sich so sehr trittstabile, oberflächlich polierte Produkte herstellen. Mit entsprechenden Drucktechniken lassen sich beispielsweise Fußbodenplatten mit Marmoreffekten erzeugen, wobei die erzeugten Fußbodenfliesen natürlichem Marmor aufgrund ihrer Festigkeit überlegen sind, andererseits wesentlich preiswerter hergestellt werden können.

Als besonders brauchbar haben sich Thiosulfatoaurat-Lösungen erwiesen, die zusätzlich noch Stabilisatoren - insbesondere Sulfite oder Thiosulfate - enthalten.

Besonders bewährt hat sich dabei das Natriumsulfit und ein Molverhältnis von Gold zu Sulfit wie (0,1 - 3) zu 10, vorzugsweise wie (0,5 - 2) zu 10, ganz besonders wie etwa 1 zu 10 in der Lösung.

### Bestimmung der wirksamen Stabilisator-Konzentration

Es wird eine 6 g/l Gold in Form von Natriumdithiosulfatoaurat(I), Na₃[Au(S₂O₃)₂], enthaltende wäßrige Lösung hergestellt. Dann werden aliquote Teile der Lösung mit unterschiedlichen Mengen an Natriumsulfit versetzt und jeweils 5 ml der erhaltenen Lösung in ein Reagenzglas gegeben. In jedes Reagenzglas wird ein Eisennagel gelegt. Nach 12 Stunden wird geprüft, aus welchen Lösungen sich Gold abgeschieden hat und welcher Art die Abscheidung ist. Die Konzentration an Gold und Sulfit in den Lösungen, das Molverhältnis von Gold zu Sulfit und die beobachteten Gold-Abscheidungen werden in der Tabelle 3 zusammengefaßt.

**Tabelle 3**

| Gold-Konzentration | | Sulfit-Konzentration | | Molverhältnis Gold : Sulfit | Gold-Abscheidung in Gegenwart eines Eisennagels |
|---|---|---|---|---|---|
| [g/l] | [mol/l] | [g/l] | [mol/l] | | |
| 6 | 0,03 | 0 | 0 | - | voluminöse braune Abscheidung |
| 6 | 0,03 | 10 | 0,08 | 3,8:10 | dicke Vergoldung mit wenig braunem Niederschlag |
| 6 | 0,03 | 20 | 0,16 | 1,9:10 | Vergoldung mit sehr wenig braunem Niederschlag |
| 6 | 0,03 | 30 | 0,24 | 1,3:10 | dünne Vergoldung |
| 6 | 0,03 | 40 | 0,32 | 0,9:10 | keine Abscheidung |

## Patentansprüche

1. Verfahren zum Färben von Keramikoberflächen unter Verwendung der wäßrigen Lösung einer Goldverbindung, **dadurch gekennzeichnet, daß** man die Keramikoberflächen mit einer wäßrigen Alkalimetall- oder Ammoniumdithiosulfatoaurat(I)-Lösung mit einer Gold-Konzentration von 0,1 - 10 Gewichts-% behandelt, das Wasser verdampft und das Dithiosulfatoaurat(I) bei Temperaturen von 300 - 1400°C zersetzt.

2. Verfahren gemäß Anspruch 1, **dadurch gekennzeichnet, daß** die Dithiosulfatoaurat(I)-Lösung eine Gold-Konzentration von 0,5 - 5,0 Gewichts-% aufweist und durch Sprühen, Tauchen, Malen oder Drucken auf die Keramikoberflächen aufgebracht wird.

3. Verfahren gemäß Anspruch 1 oder 2, **dadurch gekennzeichnet, daß** die Zersetzung des Dithiosulfatoaurats(I) zwischen Temperaturen von 800 - 1200°C, insbesondere bei 1140°C, durchgeführt wird.

4. Verfahren gemäß einem der Ansprüche 1-3, **dadurch gekennzeichnet, daß** die wäßrige Dithiosulfatoaurat(I)-Lösung zusätzlich einen wasserlöslichen Stabilisator enthält.

5. Verfahren nach Anspruch 4, **dadurch gekennzeichnet, daß** als Stabilisator Natriumsulfit eingesetzt wird.

6. Verfahren nach Anspruch 5, **dadurch gekennzeichnet, daß** in der wäßrigen Dithiosulfatoaurat(I)-Lösung Gold und Sulfit im Molverhältnis von (0,1 - 3) zu 10 vorliegen.

7. Verfahren nach Anspruch 6, **dadurch gekennzeichnet, daß** Gold und Sulfit im Molverhältnis von (0,5 - 2) zu 10 vorliegen.

8. Verfahren nach einem der Ansprüche 1-7, **dadurch gekennzeichnet, daß** die wäßrige Dithiosulfatoaurat(I)-Lösung einen pH-Wert von 6,0 - 12 aufweist.

9. Verfahren nach Anspruch 8, **dadurch gekennzeichnet, daß** die wäßrige Dithiosulfatoaurat(I)-Lösung einen pH-Wert von 10 - 12 aufweist.

## Claims

1. Method for the colouring of ceramic surfaces using the aqueous solution of a gold compound,
**characterised in that**
the ceramic surfaces are treated with an aqueous solution of alkaline metal or ammonium dithiosulphatoaurate(I) with a gold concentration of 0.1 - 10 % by weight, the water evaporated and the dithiosulphatoaurate(I) decomposed at temperatures of between 300° C and 1400° C.

2. Method according to Claim 1,
**characterised in that**
the dithiosulphatoaurate(I) solution has a gold concentration of 0.5 - 5.0 % by weight and is applied to the ceramic surface by spraying, dipping, painting or printing.

3. Method according to Claim 1 or 2,
**characterised in that**
the decomposition of the dithiosulphatoaurate(I) is carried out at temperatures of between 800° C and 1200° C, particularly at 1140° C.

4. Method according to one of the claims 1 to 3,
**characterised in that**
the aqueous dithiosulphatoaurate(I) solution also contains a water-soluble stabiliser.

5. Method according to Claim 4,
**characterised in that**
sodium sulphite is used as stabiliser.

6. Method according to Claim 5,
**characterised in that**
in the aqueous dithiosulphatoaurate(I) solution, gold and sulphite are present in a molar ratio of (0.1 - 3) to 10.

7. Method according to Claim 6,
**characterised in that**
gold and sulphite are present in a molar ratio of (0.5 - 2) to 10.

8. Method according to one of the claims 1 to 7,
**characterised in that**
the aqueous dithiosulphatoaurate(I) solution has a pH value of between 6.0 and 12.

9. Method according to Claim 8,
**characterised in that**
the aqueous dithiosulphatoaurate(I) solution has a pH value of between 10 and 12.

## Revendications

1. Procédé de coloration des surfaces de céramique par l'utilisation d'une solution aqueuse d'un composé d'or, **caractérisé par le fait que** les surfaces de céramique sont traitées par une solution aqueuse d'un métal alcalin ou d'ammonium-dithiosulfato-aurate (I) dont la concentration en or est de 0,1 à 10 % (p/p), que l'eau est évaporée, et que le dithiosulfato-aurate (I) est décomposé à une température comprise entre 300 et 1400 °C.

2. Procédé selon la revendication 1, **caractérisé par le fait que** la solution de dithiosulfato-aurate (I) montre une concentration en or de 0,5 à 5,0 % (p/p), et qu'elle peut être appliquée par pulvérisation, immersion, peinture ou impression sur les surfaces de céramique.

3. Procédé selon la revendication 1 ou 2, **caractérisé par le fait que** la décomposition du dithiosulfato-aurate (I) effectuée à des températures comprises entre 800 et 1200 °C, et plus particulièrement à 1140 °C.

4. Procédé selon une des revendications 1 à 3, **caractérisé par le fait que** la solution aqueuse de dithiosulfato-aurate (I) contient également un stabilisateur soluble dans l'eau.

5. Procédé selon la revendication 4, **caractérisé par le fait que** le sulfite de sodium est utilisé comme stabilisateur.

6. Procédé selon la revendication 5, **caractérisé par le fait que,** dans la solution aqueuse de dithiosulfato-aurate (I), l'or et le sulfite sont présents en proportions molaires de (0,1 - 3) pour 10.

7. Procédé selon la revendication 6, **caractérisé par le fait que** l'or et le sulfite sont présents en proportions molaires de (0,5 - 2) pour 10.

8. Procédé selon une des revendications 1 à 7 **caractérisé par le fait que** la valeur du pH de la solution aqueuse de dithiosulfato-aurate (I) est comprise entre 6,0 et 12.

9. Procédé selon la revendication 8, **caractérisé par le fait que** la valeur du pH de la solution aqueuse de dithiosulfato-aurate (I) est comprise entre 10 et 12.
